# EUROPEAN PATENT SPECIFICATION

(11) **EP 4 316 723 B1**
(45) Date of publication and mention of the grant of the patent: **01.10.2025**
(21) Application number: 22775580.8
(22) Date of filing: 22.03.2022
(51) Int. Cl.: B23K 26/082, B23K 26/08, B23K 26/14, B23K 26/352

(54) **LASER MACHINING DEVICE AND LASER MACHINING METHOD**
LASERBEARBEITUNGSVORRICHTUNG UND LASERBEARBEITUNGSVERFAHREN
DISPOSITIF D'USINAGE AU LASER ET PROCÉDÉ D'USINAGE AU LASER

(30) Priority: 26.03.2021 JP 2021053945
(43) Date of publication of application: 07.02.2024
(73) Proprietor: Amada Co., Ltd., Isehara-shi, Kanagawa 259-1196 (JP)
(72) Inventor: SUGIYAMA, Akihiko, Isehara-shi, Kanagawa 259-1196 (JP)
(74) Representative: Grünecker Patent- und Rechtsanwälte PartG mbB
(86) International application number: PCT/JP2022/013107
(87) International publication number: WO 2022/202797

(56) References cited:
- JP-A- 2000 015 395
- JP-A- 2000 015 395
- JP-A- 2001 219 289
- JP-A- 2009 082 960
- JP-A- 2016 107 299
- JP-A- 2020 093 277
- JP-A- 2020 093 277
- JP-A- S5 935 893
- JP-B2- 2 593 464
- US-A1- 2010 039 916

## Description

The present invention relates to a laser processing machine and a laser processing method, see claims 1 and 2.

### Background Art

To ensure accurate laser processing on a sheet metal (workpiece), a marking-off line indicating a processing position is marked in advance on the surface of the workpiece to be processed.

Marking for forming a marking-off line on the surface of the workpiece is performed by irradiating the surface of the workpiece with a laser beam from a laser processing machine. The laser beam from the laser processing machine with which the surface of the workpiece is irradiated generally has a beam intensity distribution in a Gaussian shape, and marking is performed in a state where the focal point of the laser beam is aligned with the surface of the workpiece (just-focused state). Thus, only a high beam intensity portion of the laser beam with which the workpiece surface is irradiated is absorbed by the workpiece surface, and a fine linear marking-off line is marked.

The preambles of independent claims 1 and 2 are disclosed in Patent Literature 2. Further examples relating to laser processing are disclosed in Patent Literature 3 and 4.

### Citation List

### Patent Literature

Patent Literature 1: Japanese Patent No. 2593464
Patent Literature 2: JP 2020 093277 A, describing the preamble of claims 1 and 2
Patent Literature 3: JP 2000 015395 A
Patent Literature 4: JP 2009 082960 A

### Summary

Depending on the content of the workpiece processing, it may be desired to perform marking on the surface of the workpiece and draw a wide, thick marking-off line before processing. In such a case, a thick marking-off line is marked by repeatedly drawing such a thin, linear marking-off line as described above, while slightly shifting the line to fill in the thick marking-off line. However, there has been a problem with repeated drawing of a thin marking-off line in requiring significant time and labor. There has also been a problem with repeated irradiation on the surface of the workpiece with the laser beam in leading to discoloration due to the effect of oxidation or the like.

Another possible method for marking a thick marking-off line is to increase the thickness of the laser beam with which the surface of the workpiece is irradiated by moving the processing head of the laser processing machine away from the workpiece before irradiation, that is, by moving the focal point of the laser beam away from the surface of the workpiece to bring the workpiece into a defocused state. However, irradiation with the laser beam in this manner causes a reduction in energy density. To compensate for this, if the output of the laser beam is increased to such an extent that the laser beam is absorbed by the workpiece surface, the beam intensity of the reflected light also increases in relation to the absorptance (or reflectivity) of the laser beam. This requires additional safety considerations and makes it difficult to draw a thick marking-off line, which has been problematic.

A laser processing machine according to the present invention is defined in independent claim 1.

Further, a laser processing method according to the present invention is defined in independent claim 2.

According to the laser processing system and the laser processing method of the present invention, by advancing the irradiation position of the laser beam in a predetermined direction while swinging the trajectory of the beam spot formed on the surface of the sheet metal with a predetermined amplitude, it is possible to mark the sheet metal with a marking-off line that is visually recognized as having a thickness corresponding to the vibration range.

According to the laser processing machine and the laser processing method of the present invention, it is possible to mark a wide marking-off line on the surface of the sheet metal to be laser processed without defocusing the focal point of the laser beam.

### Brief Description of Drawings

[Figure 1] Figure 1 is a diagram illustrating an overall configuration example of a laser processing machine.
[Figure 2] Figure 2 is a perspective view illustrating a detailed configuration example of a collimator unit and a processing head in the laser processing machine.
[Figure 3] Figure 3 is a diagram for explaining a displacement of an irradiation position of a laser beam on a sheet metal by a beam vibration mechanism.
[Figure 4] Figure 4 is a diagram for explaining the vibration range of the laser beam during marking of a marking-off line on the surface of the sheet metal by the laser processing machine.
[Figure 5] Figure 5 is a diagram illustrating a trajectory of a marking-off line marked on the surface of the sheet metal by the laser processing machine of one embodiment, and directions in which molten metal is blown off.
[Figure 6] Figure 6 is a diagram illustrating the shape of the marking-off line marked on the surface of the sheet metal by the laser processing machine.
[Figure 7] Figure 7 is a view for explaining a state in which the emission position of the laser beam from the opening of the processing head has been shifted in an advancing direction during marking of the marking-off line on the surface of the sheet metal by the laser processing machine.

### Description of Embodiment

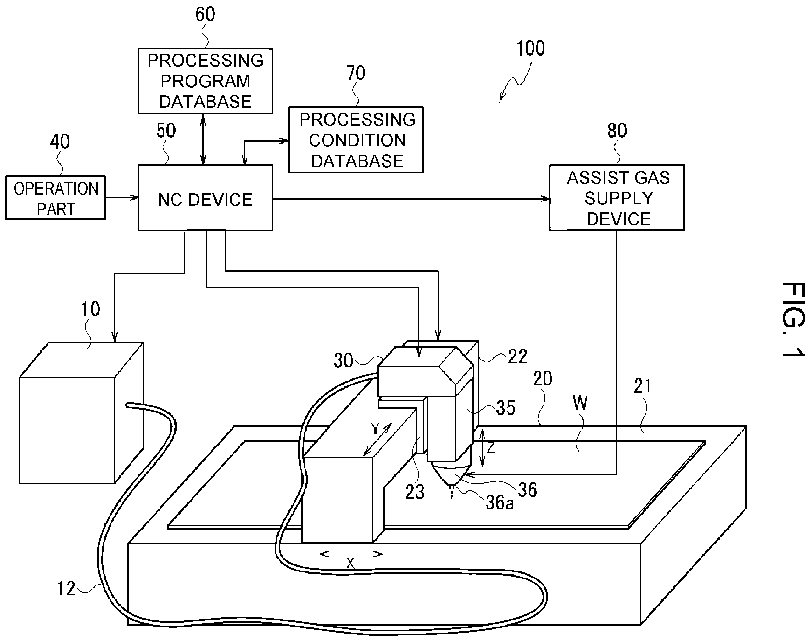

A laser processing machine and a laser processing method will be described below with reference to the accompanying drawings. Figure 1 is a diagram illustrating an overall configuration example of a laser processing machine 100.

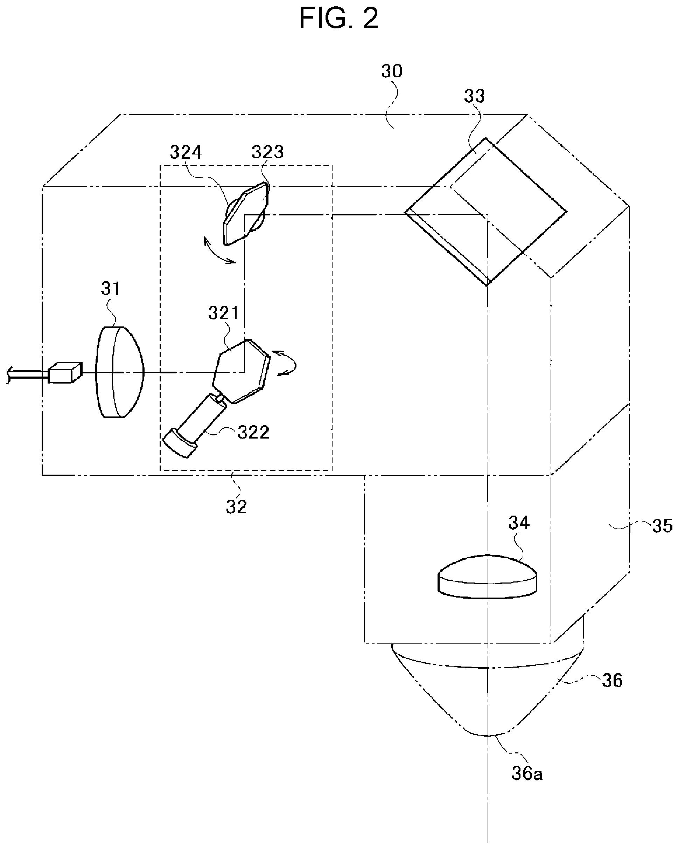

Figure 2 is a perspective view illustrating a detailed configuration example of a collimator unit 30 and a processing head 35 in the laser processing machine 100. In Figure 1, the laser processing machine 100 includes: a laser oscillator 10 that generates and emits a laser beam; a laser processing unit 20; and a process fiber 12 that transmits the laser beam emitted from the laser oscillator 10 to the laser processing unit 20. Note that the process fiber 12 may be single-core or multi-clad, and an optical coupler may be provided on a transmission path to the laser processing unit 20.

The laser processing machine 100 includes an operation part 40, a numerical control (NC) device 50, a processing program database 60, a processing condition database 70, and an assist gas supply device 80. The NC device 50 is an example of a control device that controls each part of the laser processing machine 100.

As the laser oscillator 10, a preferable one is a laser oscillator that amplifies an excitation beam emitted from a laser diode to emit a laser beam with a predetermined wavelength, or a laser oscillator that directly uses a laser beam emitted from the laser diode. The laser oscillator 10 is, for example, a solid laser oscillator, a fiber laser oscillator, a disk laser oscillator, or a direct diode laser oscillator (DDL oscillator).

The laser oscillator 10 emits a 1-µm band laser beam with a wavelength of 900 nm to 1100 nm. Taking the fiber laser oscillator and the DDL oscillator as examples, the fiber laser oscillator emits a laser beam with a wavelength of 1060 nm to 1080 nm, and the DDL oscillator emits a laser beam with a wavelength of 910 nm to 950 nm. In some cases, the laser oscillator 10 may use the wavelength band in combination with a wavelength band of a blue laser beam to a green laser beam with a wavelength of 540 nm to 550 nm or the NIR (near infrared ray) wavelength band described above.

The laser processing unit 20 includes: a processing table 21 on which a sheet metal W to be processed is placed; the processing head 35 having a nozzle 36 that is attached to the tip end thereof and emits a laser beam from a circular opening 36a to the sheet metal W; and a gate-type X-axis carriage 22 and a gate-type Y-axis carriage 23 that move the processing head 35 to a processing position. The processing head 35 is connected to the collimator unit 30 fixed to the Y-axis carriage 23. The X-axis carriage 22 is configured to be movable in the X-axis direction on the processing table 21. The Y-axis carriage 23 is configured to be movable on the X-axis carriage 22 in the Y-axis direction perpendicular to the X-axis. The X-axis carriage 22 and the Y-axis carriage 23 function as a moving mechanism for moving the collimator unit 30 and the processing head 35 along the surface of the sheet metal W in the X-axis direction, the Y-axis direction, or an arbitrary combined direction of the X-axis and the Y-axis.

Instead of the collimator unit 30 and the processing head 35 being moved along the surface of the sheet metal W, the collimator unit 30 and the processing head 35 may be fixed in position, and the sheet metal W may move. The laser processing machine 100 may include a moving mechanism for moving the relative positions of the collimator unit 30 and the processing head 35 with respect to the surface of the sheet metal W.

The assist gas supply device 80 supplies an assist gas to the processing head 35 during the processing of the sheet metal W. When the sheet metal W to be processed is a ferrous material, the assist gas supply device 80 can use oxygen, nitrogen, or air as the assist gas. When oxygen is used as the assist gas, the assist gas supply device 80 controls the injection state of the gas to prevent excessive combustion. When the sheet metal W is a stainless-steel material, the assist gas supply device 80 can use nitrogen or air as the assist gas. The assist gas supplied to the processing head 35 is blown from the opening 36a in a direction perpendicular to the sheet metal W. The assist gas disperses molten metal within a width of kerf where the sheet metal W has melted.

The collimator unit 30 includes a collimation lens 31 that converts the laser beam being a divergent beam emitted from the process fiber 12, into a parallel beam (collimated beam). The collimator unit 30 includes a Galvano scanner unit 32, and a bend mirror 33 that reflects the laser beam emitted from the Galvano scanner unit 32 downward in the Z-axis direction perpendicular to the X-axis and the Y-axis. The processing head 35 includes a converging lens 34 that converges the laser beam reflected by the bend mirror 33 to irradiate the sheet metal W with the laser beam. Note that the laser beam being a divergent beam emitted from the process fiber 12 advances so that the center of its optical axis is located at the center of the collimation lens 31.

The laser processing machine 100 is aligned so that the laser beam emitted from the opening 36a of the nozzle 36 is positioned at the center of the opening 36a. In the reference state, the laser beam is emitted from the center of the opening 36a. The Galvano scanner unit 32 functions as a beam vibration mechanism for vibrating, within the opening 36a, the laser beam that advances in the processing head 35 and is emitted from the opening 36a. How the Galvano scanner unit 32 vibrates the laser beam will be described later.

The Galvano scanner unit 32 includes a scanning mirror 321 that reflects the laser beam emitted from the collimation lens 31, and a drive part 322 that rotates the scanning mirror 321 to have a predetermined angle. Further, the Galvano scanner unit 32 includes a scanning mirror 323 that reflects the laser beam emitted from the scanning mirror 321 and a drive part 324 that rotates the scanning mirror 323 to have a predetermined angle. The scanning mirror 321 and the scanning mirror 323 are installed to rotate in different directions.

The drive parts 322, 324 can set the scanning mirrors 321, 323 at predetermined angles, respectively, based on the control by the NC device 50. The drive parts 322, 324 are capable of reciprocally vibrating the scanning mirrors 321, 323 within a predetermined angle range. The Galvano scanner unit 32 can change the angle of one or both of the scanning mirror 321 and the scanning mirror 323 to move the beam spot of the laser beam with which the sheet metal W is irradiated. The Galvano scanner unit 32 can reciprocally vibrate one or both of the scanning mirror 321 and the scanning mirror 323 to vibrate the beam spot of the laser beam.

The Galvano scanner unit 32 is an example of the beam vibration mechanism, and the beam vibration mechanism is not limited to the Galvano scanner unit 32 including the pair of scanning mirrors.

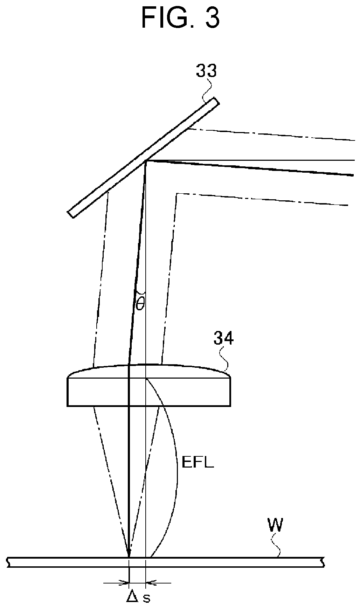

Figure 3 is a diagram for explaining the displacement of the irradiation position of the laser beam on the sheet metal W by the Galvano scanner unit 32. Here, a state is shown where one or both of the scanning mirror 321 and the scanning mirror 323 are inclined to displace the position of the laser beam with which the sheet metal W is irradiated. In Figure 3, the fine solid line bent by the bend mirror 33 and passing through the converging lens 34 indicates the optical axis of the laser beam, with the laser processing machine 100 in a reference state.

Specifically, due to the operation of the Galvano scanner unit 32 located in front of the bend mirror 33, the angle of the optical axis of the laser beam incident on the bend mirror 33 changes, causing the optical axis to deviate from the center of the bend mirror 33. In Figure 3, for the sake of simplicity, the incident position of the laser beam on the bend mirror 33 is the same before and after the operation of the Galvano scanner unit 32.

It is assumed that due to the action of the Galvano scanner unit 32, the optical axis of the laser beam is displaced from the position indicated by the fine solid line to the position indicated by the thick solid line. When the laser beam reflected by the bend mirror 33 is inclined at an angle θ, the irradiation position of the laser beam on the sheet metal W is displaced by a distance Δs. When the focal distance of the converging lens 34 is an effective focal length (EFL), the distance Δs is calculated by EFL × sin θ.

When the Galvano scanner unit 32 inclines the laser beam by the angle θ in a direction opposite to the direction illustrated in Figure 3, the irradiation position of the laser beam on the sheet metal W can be displaced by the distance Δs in a direction opposite to the direction illustrated in Figure 3. The distance Δs is a distance less than the radius of the opening 36a, and is preferably a distance equal to or less than the maximum distance, obtained by subtracting a predetermined margin length from the radius of the opening 36a.

The NC device 50 can vibrate the laser beam in a predetermined direction on the surface of the sheet metal W by controlling the drive parts 322, 324 of the Galvano scanner unit 32. The vibration of the laser beam enables the vibration of the beam spot formed on the surface of the sheet metal W.

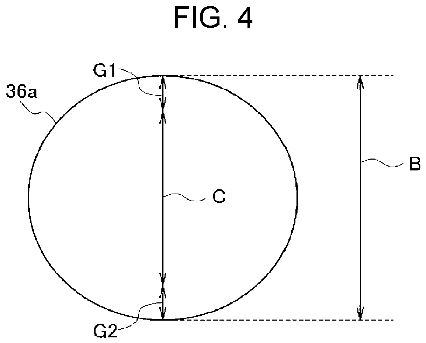

The processing program database 60 stores a processing program for marking a making-off on the surface of the sheet metal W and information on the vibration range of the laser beam corresponding to a set thickness of the marking-off line. Figure 4 is a diagram for explaining the vibration range of the laser beam during marking of a marking-off line on the surface of the sheet metal W by the laser processing machine 100. As illustrated in Figure 4, the vibration range of the laser beam is equal to or less than the maximum distance defined by a distance C, obtained by subtracting predetermined margin lengths (G1 + G2) from a diameter B of the opening 36a. The NC device 50 reads the processing program and the information on the vibration range of the laser beam from the processing program database 60. Then, the NC device 50 controls the X-axis carriage 22 and the Y-axis carriage 23 to mark the marking-off lines on the surface of the sheet metal W based on the processing program, while controlling the drive parts 322, 324 of the Galvano scanner unit 32 to vibrate the beam spot on the surface of the sheet metal W at the read vibration range.

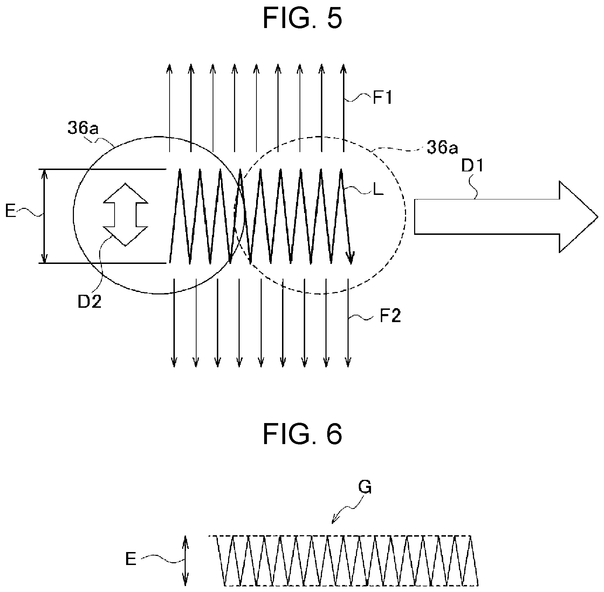

The laser processing machine 100 configured as described above marks a marking-off line on the surface of the sheet metal W, using a laser beam emitted from the laser oscillator 10. Figure 5 is a diagram illustrating a trajectory of a marking-off line marked on the sheet metal W by the laser processing machine 100, and directions in which molten metal is blown off. As illustrated in Figure 5, the processing head 35 advances on the sheet metal W in an advancing direction D1 for drawing the marking-off line while the laser beam vibrates within the opening 36a of the nozzle 36 in a direction D2 perpendicular to the advancing direction D1 at an amplitude E/2 corresponding to the thickness of the marking-off line. In such an operation, when the position of the opening 36a of the nozzle 36 moves from the position of the opening 36a indicated by the solid line to the position of the opening 36a indicated by the dotted line, the marking-off line is marked on the sheet metal W with a trajectory as indicated by an arrow L.

During the marking process for the marking-off line, the assist gas is supplied from the assist gas supply device 80 to the processing head 35, whereby the assist gas is blown onto the sheet metal W from the opening 36a of the processing head 35. At this time, the assist gas is always blown perpendicularly onto the sheet metal W from the center position of the opening 36a. The pressure distribution of the assist gas applied to the surface of the sheet metal W changes to a low pressure by diffusion from the gap between the assist gas and the sheet metal W immediately after the assist gas is jetted out from the opening 36a. Thus, the gas pressure is highest at the center of the opening 36a, and decreases toward the periphery. In other words, the flow velocity is lowest at the center of the opening 36a, and increases toward the periphery. That is, the fluid (assist gas) velocity is highest on the edge side of the opening 36a in the vibration direction of the laser beam. Therefore, the laser beam vibrates while passing through the center position of the opening 36a, and the metal melted by the marking is blown off in directions F1, F2 which are the same as the vibration direction D2 of the laser beam, and the molten metal does not adhere to the marked marking-off line.

Figure 6 is a diagram illustrating the shape of the marking-off line marked on the surface of the sheet metal W by the laser processing machine 100. As a result of the processing described above, a distinct marking-off line can be marked on the surface of the sheet metal W, using a line G of the shape illustrated in Figure 6, specifically a wide line G that is visually recognized as having a thickness corresponding to the amplitude E/2 of the laser beam.

The thickness of the marking-off line can be changed by appropriately changing the information on the vibration range E of the laser beam included in the processing program stored in the processing program database 60.

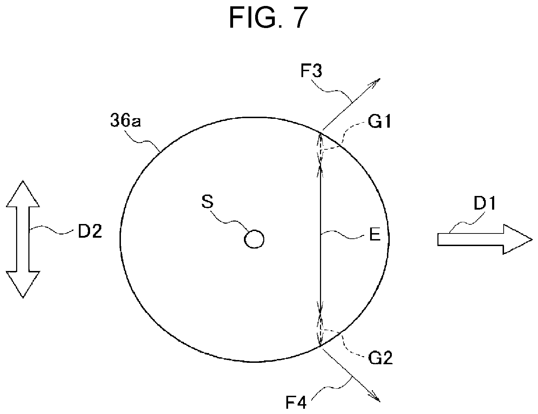

Figure 7 is a view for explaining a state in which the emission position of the laser beam from the opening 36a of the processing head 35 has been shifted in the advancing direction during marking of the marking-off line on the surface of the sheet metal by the laser processing machine 100 of one embodiment. As illustrated in Figure 7, the NC device 50 controls the drive parts 322, 324 of the Galvano scanner unit 32 to shift the position of emission of the laser beam from the opening 36a from the center of the opening 36a to the side of the advancing direction D1 of the laser beam and vibrate the laser beam.

By vibrating the laser beam with the emission position of the laser beam shifted as described above, the beam spot on the sheet metal W is located forward of the center S of the blowing position of the assist gas in the advancing direction D1. Therefore, the blowing direction of the molten metal is inclined toward the advancing direction D1 of the laser beam as indicated by F3 and F4, and the probability of the molten metal adhering to the marking-off line formed behind in the advancing direction D1 can be further reduced. In this case, the emission position of the laser beam can be shifted within a range in which a length (E + G1 + G2) obtained by adding the predetermined margin lengths G1, G2 to the vibration range E of the laser beam fall within the opening 36a of the nozzle 36.

The present invention is not limited to the present disclosure described above, and various modifications can be made without departing from the scope of the present invention as defined in the appended claims.

## Claims

1. A laser processing machine (100) comprising:
a processing head (35) having a nozzle (36) attached to a tip end of the processing head (35), the nozzle (36) comprising an opening (36a) and the nozzle (36) being configured to emit a laser beam from the opening (36a);
a converging lens (34) provided in the processing head (35) and configured to converge the laser beam to form a beam spot on a surface of a sheet metal (W);
a moving mechanism (22, 23) configured to move a relative position of the processing head (35) with respect to the surface of the sheet metal (W);
a beam vibration mechanism (32) configured to vibrate, within the opening (36a), the laser beam emitted from the opening (36a) and vibrate the beam spot on the surface of the sheet metal (W);
a processing program database (60) comprising a processing program for marking the marking-off line on the surface of the sheet metal and information on a vibration range of the laser beam corresponding to a set thickness of the marking-off line; and
an assist gas supply device (80) configured to supply the processing head (35) with an assist gas, the assist gas being blown in use onto the sheet metal (W) from the opening (36a) during marking of the marking-off line on the sheet metal (W), wherein
the beam vibration mechanism (32) is configured to vibrate the laser beam in a direction perpendicular to an advancing direction of an irradiation position of the laser beam advanced by the moving mechanism (22, 23), and
the beam vibration mechanism (32) includes a function of moving the beam spot of the laser beam emitted from the opening (36a) and converged on the surface of the sheet metal (W),
the laser processing machine (100) **characterised by** :
a control device (50) configured to:
mark a marking-off line on the sheet metal (W) by reading, from the processing program database (60), the processing program for marking the marking-off line on the surface of the sheet metal (W) and information on a vibration range of the laser beam corresponding to a set thickness of the marking-off line,
control the moving mechanism (22, 23) to move a relative position of the processing head (35) and advance an irradiation position of the laser beam in a predetermined direction while controlling the beam vibration mechanism (32) to vibrate the beam spot on the surface of the sheet metal (W) at the vibration range having been read,
control the beam vibration mechanism (32) in such a manner that, in use, a position of the beam spot on the surface of the sheet metal (W) is located forward of a center of a blowing position of the assist gas in an advancing direction of the laser beam.

2. A laser processing method comprising
irradiating a surface of a sheet metal (W) with a converged laser beam from an opening (36a) of a nozzle (36) attached to a tip end of a processing head (35);
advancing an irradiation position of the laser beam emitted from the opening (36a) in a predetermined direction by moving a relative position of the nozzle (36) with respect to the surface of the sheet metal (W), while vibrating a beam spot formed on the surface of the sheet metal (W) with a predetermined amplitude by vibrating the laser beam within the opening (36a), to mark a marking-off line on the sheet metal (W);
supplying the processing head (35) with an assist gas, the assist gas being blown onto the sheet metal (W) from the opening (36a) during marking of the marking-off line on the sheet metal (W);
vibrating the laser beam in a direction perpendicular to an advancing direction of the irradiation position of the laser beam; and
moving the beam spot of the laser beam emitted from the opening (36a) and converged on the surface of the sheet metal (W);
**characterized in that** the laser processing method further comprises:
locating a position of the beam spot on the surface of the sheet metal (W) forward of a center of a blowing position of the assist gas in the advancing direction of the irradiation position of the laser beam.

## Patentansprüche

1. Laserbearbeitungsvorrichtung (100), umfassend:
einen Bearbeitungskopf (35) mit einer Düse (36), die an einem Spitzenende des Bearbeitungskopfes (35) angebracht ist, wobei die Düse (36) eine Öffnung (36a) umfasst und die Düse (36) konfiguriert ist, um einen Laserstrahl aus der Öffnung (36a) zu emittieren;
eine Konvergenzlinse (34), die in dem Bearbeitungskopf (35) vorgesehen und konfiguriert ist, um den Laserstrahl zu konvergieren, um einen Strahlpunkt auf einer Oberfläche eines Blechs (W) zu bilden;
einen Bewegungsmechanismus (22, 23), der konfiguriert ist, um eine relative Position des Bearbeitungskopfes (35) in Bezug auf die Oberfläche des Blechs (W) zu bewegen;
einen Strahlvibrationsmechanismus (32), der konfiguriert ist, um den aus der Öffnung (36a) emittierten Laserstrahl innerhalb der Öffnung (36a) in Schwingung zu versetzen und den Strahlpunkt auf der Oberfläche des Blechs (W) in Schwingung zu versetzen;
eine Verarbeitungsprogrammdatenbank (60), die ein Verarbeitungsprogramm zum Markieren der Abgrenzungslinie auf der Oberfläche des Blechs (W) und Informationen über einen Schwingungsbereich des Laserstrahls entsprechend einer eingestellten Dicke der Abgrenzungslinie umfasst; und
eine Hilfsgaszuführungsvorrichtung (80), die konfiguriert ist, um dem Bearbeitungskopf (35) ein Hilfsgas zuzuführen, wobei das Hilfsgas in Verwendung während des Markierens der Markierungslinie auf dem Blech (W) von der Öffnung (36a) auf das Blech (W) geblasen wird, wobei
der Strahlvibrationsmechanismus (32) konfiguriert ist, um den Laserstrahl in einer Richtung senkrecht zu einer Vorschubrichtung einer Bestrahlungsposition des Laserstrahls schwingt, die durch den Bewegungsmechanismus (22, 23) vorgeschoben wird, und
der Strahlvibrationsmechanismus (32) eine Funktion zum Bewegen des Strahlpunkts des von der Öffnung (36a) emittierten und auf die Oberfläche des Blechs (W) konvergierten Laserstrahls aufweist,
wobei die Laserbearbeitungsvorrichtung **gekennzeichnet ist durch**:
eine Steuervorrichtung (50), die konfiguriert ist, um:
eine Abgrenzungslinie auf dem Blech (W) zu markieren, indem sie aus der Verarbeitungsprogrammdatenbank (60) das Verarbeitungsprogramm zum Markieren der Abgrenzungslinie auf der Oberfläche des Blechs (W) und Informationen über einen Schwingungsbereich des Laserstrahls entsprechend einer eingestellten Dicke der Abgrenzungslinie liest,
den Bewegungsmechanismus (22, 23) zu steuern, um eine relative Position des Bearbeitungskopfes (35) zu bewegen und eine Bestrahlungsposition des Laserstrahls in einer vorbestimmten Richtung vorwärts zu bewegen, während der Strahlvibrationsmechanismus (32) gesteuert wird, um den Strahlpunkt auf der Oberfläche des Blechs (W) in dem gelesenen Schwingungsbereich schwingen zu lassen,
den Strahlvibrationsmechanismus (32) so zu steuern, dass, in Verwendung, eine Position des Strahlpunkts auf der Oberfläche des Blechs (W) vor einer Mitte einer Blasposition des Hilfsgases in einer Vorschubrichtung des Laserstrahls liegt.

2. Laserbearbeitungsverfahren, umfassend
Bestrahlung einer Oberfläche eines Blechs (W) mit einem konvergierten Laserstrahl aus einer Öffnung (36a) einer Düse (36), die an einem Spitzenende eines Bearbeitungskopfes (35) angebracht ist;
Vorrücken einer Bestrahlungsposition des aus der Öffnung (36a) emittierten Laserstrahls in eine vorbestimmte Richtung durch Bewegen einer relativen Position der Düse (36) in Bezug auf die Oberfläche des Blechs (W), während ein auf der Oberfläche des Blechs (W) gebildeter Strahlpunkt mit einer vorbestimmten Amplitude durch Schwingen des Laserstrahls innerhalb der Öffnung (36a) in Schwingung versetzt wird, um eine Abgrenzungslinie auf dem Blech (W) zu markieren;
Versorgen des Bearbeitungskopfes (35) mit einem Hilfsgas, wobei das Hilfsgas während des Markierens der Abgrenzungslinie auf dem Blech (W) von der Öffnung (36a) auf das Blech (W) geblasen wird;
Schwingen des Laserstrahls in einer Richtung senkrecht zu einer Vorschubrichtung der Bestrahlungsposition des Laserstrahls; und
Bewegen des Strahlpunktes des Laserstrahls, der aus der Öffnung (36a) austritt und auf der Oberfläche des Blechs (W) konvergiert;
**dadurch gekennzeichnet, dass** das Laserbearbeitungsverfahren ferner umfasst:
Anordnen einer Position des Strahlpunktes auf der Oberfläche des Blechs (W) vor einem Zentrum einer Blasposition des Hilfsgases in der Vorschubrichtung der Bestrahlungsposition des Laserstrahls.

## Revendications

1. Machine d'usinage au laser (100) comportant :
une tête d'usinage (35) ayant une buse (36) attachée à une extrémité de pointe de la tête d'usinage (35), la buse (36) comportant une ouverture (36a) et la buse (36) étant configurée pour émettre un faisceau laser à partir de l'ouverture (36a) ;
une lentille convergente (34) fournie dans la tête d'usinage (35) et configurée pour faire converger le faisceau laser pour former une tache de faisceau sur une surface d'une tôle (W) ;
un mécanisme de déplacement (22, 23) configuré pour déplacer une position relative de la tête d'usinage (35) par rapport à la surface de la tôle (W) ;
un mécanisme de vibration de faisceau (32) configuré pour faire vibrer, à l'intérieur de l'ouverture (36a), le faisceau laser émis à partir de l'ouverture (36a) et faire vibrer la tache de faisceau sur la surface de la tôle (W) ;
une base de données de programme d'usinage (60) comportant un programme d'usinage pour le marquage de la ligne de démarcation sur la surface de la tôle et des informations sur une plage de vibration du faisceau laser correspondant à une épaisseur définie de la ligne de démarcation ; et
un dispositif d'alimentation en gaz d'assistance (80) configuré pour alimenter la tête d'usinage (35) avec un gaz d'assistance, le gaz d'assistance étant soufflé, lors de l'utilisation, sur la tôle (W) à partir de l'ouverture (36a) pendant le marquage de la ligne de démarcation sur la tôle (W), où
le mécanisme de vibration de faisceau (32) est configuré pour faire vibrer le faisceau laser dans une direction perpendiculaire à une direction d'avancement d'une position d'irradiation du faisceau laser avancée par le mécanisme de déplacement (22, 23), et
le mécanisme de vibration de faisceau (32) inclut une fonction consistant à déplacer la tache de faisceau du faisceau laser émise à partir de l'ouverture (36a) et convergeant sur la surface de la tôle (W), la machine d'usinage au laser (100) étant **caractérisée par** :
un dispositif de commande (50) configuré pour :
marquer une ligne de démarcation sur la tôle (W) en lisant, dans la base de données de programme d'usinage (60), le programme d'usinage pour marquer la ligne de démarcation sur la surface de la tôle (W) et des informations sur une plage de vibration du faisceau laser correspondant à une épaisseur définie de la ligne de démarcation,
commander le mécanisme de déplacement (22, 23) de manière à déplacer une position relative de la tête d'usinage (35) et à avancer une position d'irradiation du faisceau laser dans une direction prédéterminée tout en commandant le mécanisme de vibration de faisceau (32) de manière à faire vibrer la tache de faisceau sur la surface de la tôle (W) selon la plage de vibration qui a été lue,
commander le mécanisme de vibration de faisceau (32) de telle sorte que, lors de l'utilisation, une position de la tache de faisceau sur la surface de la tôle (W) soit située en avant d'un centre d'une position de soufflage du gaz d'assistance dans une direction d'avancement du faisceau laser.

2. Procédé d'usinage au laser comportant
l'irradiation d'une surface d'une tôle (W) avec un faisceau laser convergent provenant d'une ouverture (36a) d'une buse (36) attachée à une extrémité de pointe d'une tête d'usinage (35) ;
le déplacement vers l'avant d'une position d'irradiation du faisceau laser émis à partir de l'ouverture (36a) dans une direction prédéterminée en déplaçant une position relative de la buse (36) par rapport à la surface de la tôle (W), tout en faisant vibrer une tache de faisceau formée sur la surface de la tôle (W) avec une amplitude prédéterminée en faisant vibrer le faisceau laser à l'intérieur de l'ouverture (36a), afin de marquer une ligne de démarcation sur la tôle (W) ;
l'alimentation de la tête d'usinage (35) avec un gaz d'assistance, le gaz d'assistance étant soufflé sur la tôle (W) à partir de l'ouverture (36a) pendant le marquage de la ligne de démarcation sur la tôle (W) ;
le fait de faire vibrer le faisceau laser dans une direction perpendiculaire à une direction d'avancement de la position d'irradiation du faisceau laser ; et
le déplacement de la tache de faisceau du faisceau laser émis à partir de l'ouverture (36a) et convergeant sur la surface de la tôle (W) ;
**caractérisé en ce que** le procédé d'usinage au laser comporte en outre :
la localisation d'une position de la tache de faisceau sur la surface de la tôle (W) en avant d'un centre d'une position de soufflage du gaz d'assistance dans la direction d'avancement de la position d'irradiation du faisceau laser.
